# EUROPEAN PATENT APPLICATION

(11) **EP 4 656 940 A1**
(43) Date of publication of application: **03.12.2025**
(21) Application number: 25173448.9
(22) Date of filing: 30.04.2025
(51) Int. Cl.: F23C 3/00

(54) **DEVICE AND APPARATUS FOR HEATING A FLOW OF HYDROGEN**

(30) Priority: 30.05.2024 GB 202407679
(71) Applicant: Rolls-Royce plc, London N1 9FX (GB)
(72) Inventor: Pathania, Rohit Singh, Derby, DE24 8BJ (GB); Ravikanti, Murthy V V S, Derby, DE24 8BJ (GB); Rimmer, John E, Derby, DE24 8BJ (GB)
(74) Representative: Rolls-Royce plc

(57) **Abstract**

A heating device 100 comprises a thermally-conductive outer tube 102, and a combustor 106 arranged to combust air and gaseous hydrogen input to the device and introduce resulting combustion products into a first end 102A of the outer tube. The device includes an igniter arranged to ignite the air and gaseous hydrogen. Combustion products produced by the combustor flow from the combustor to an output of the device along a flow path 120 such that they are in contact with the internal surface of the outer tube over at least a portion 120B of the flow path. Apparatus 200 for heating a flow of hydrogen comprises a conduit 201 for conducting the flow of hydrogen from a principal input port 204 to a principal output port 206, the apparatus further comprising the heating device 100 located at least partially within the conduit between the principal input port and the principal output port.

## Description

### TECHNICAL FIELD

The invention relates to devices and apparatus for heating a flow of hydrogen.

### BACKGROUND

Heating a flow of hydrogen is typically a key step prior to its combustion in a hydrogen-burning gas turbine engine or oxidation in a fuel cell stack. Depending on the fuel system within which heating is carried out, it may be required to vaporise or complete vaporisation of a flow of liquid or supercritical hydrogen, either with or without an increase in temperature, or to raise the temperature of a flow of cold gaseous hydrogen. In a known apparatus, a portion of a flow of hydrogen input to the apparatus is separated from the remainder of the flow and combusted. The combustion products and the remainder of the flow are provided to respective flow paths of a heat-exchanger in order to vaporise, or vaporise and raise the temperature of, the remainder of the flow. Use of a heat-exchanger adds significant weight to the apparatus, potentially making it unattractive in aerospace applications.

### BRIEF SUMMARY

A first aspect of the invention provides a heating device for heating a flow of hydrogen, the heating device comprising
(i) an elongate, thermally-conductive outer tube;
(ii) a combustor arranged to combust air and gaseous hydrogen input to the heating device and to introduce resulting combustion products into a first end of the outer tube; and
(iii) an igniter arranged to ignite the air and gaseous hydrogen,
wherein the heating device is arranged such that combustion products produced by the combustor flow from the combustor to an output of the heating device along a flow path such that they are in contact with at least a portion of the internal surface of the outer tube over at least a portion of the flow path.

The heating device may be configured such that
(i) the second end of the outer tube is closed;
(ii) the heating device comprises an inner tube within the outer tube; and
(iii) the combustor is arranged to introduce combustion products into a first end of the inner tube, the second end of the inner tube being open;
the heating device being arranged such that combustion products produced by the combustor flow from the combustor to the output of the heating device along a flow path having a first flow path portion including the interior of the inner tube and a subsequent second flow path portion which includes space between the inner and outer tubes.

Alternatively, the heating device may be configured such that:
(i) the second end of the outer tube is closed;
(ii) the heating device comprises an inner tube within the outer tube, the inner tube being open at both ends; and
(iii) the combustor is arranged to introduce combustion products into the space between the inner and the outer tube,
the heating device being arranged such that combustion products produced by the combustor flow from the combustor to the output of the heating device along a flow path having a first flow path portion including space between the inner and outer tubes and a subsequent second flow path portion including the interior of the inner tube.

Alternatively, the heating device may be configured such that
(i) the second end of the outer tube is closed;
(ii) the outer tube contains a partition which longitudinally divides the interior of the outer tube into first and second spaces over a length portion thereof; and
(iii) the combustor is arranged to introduce combustion products into the first space,
the heating device being arranged such that combustion products produced by the combustor flow from the combustor to the output of the heating device along a flow path having a first flow path portion and a subsequent second flow path portion, the first flow path portion including the first space and the second flow path portion including the second space.

A second aspect of the invention provides apparatus for heating a flow of hydrogen, the apparatus comprising a conduit for conducting the flow of hydrogen from a principal input port to a principal output port thereof, the apparatus further comprising a heating device according to the first aspect located at least partially within the conduit between the principal input port and the principal output such that a portion of the internal surface of the outer tube with which combustion products are in contact in use of the apparatus is inside the conduit. The conduit may have a conduit wall, the second end of the outer tube of the heating device being open and extending through the conduit wall, forming an output for combustion products. The conduit wall may have a subsidiary output port between the principal input port and the principal output port, the heating apparatus further comprising a subsidiary conduit arranged to transport a portion of a flow of hydrogen input at the principal input port from the subsidiary output port to the combustor of the heating device. The subsidiary conduit may include a heater arranged to heat hydrogen within the subsidiary conduit. The heating device may extend parallel to a portion of the conduit which includes the heating device.

A third aspect of the invention provides a fuel system comprising a store of hydrogen and a fuel line coupling the store of hydrogen to an output of the fuel system, the fuel line including apparatus according to the second aspect. A central length portion of the fuel line may comprise two sub-portions arranged in parallel, each sub-portion including a respective apparatus according to the second aspect.

A fourth aspect of the invention provides an aircraft comprising a fuel system according to the second aspect.

### BRIEF DESCRIPTION OF THE DRAWINGS

Embodiments of the invention are described below by way of example only and with reference to the accompanying drawings in which:
- Figure 1: shows a first example heating device;
- Figure 2: shows a first example heating apparatus which includes the heating device of Figure 1;
- Figures 3 & 4: show second and third example heating devices;
- Figure 5: shows a second example heating apparatus; and
- Figures 6 & 7: show first and second example fuel systems respectively, each including the heating apparatus of Figure 2.

### DETAILED DESCRIPTION

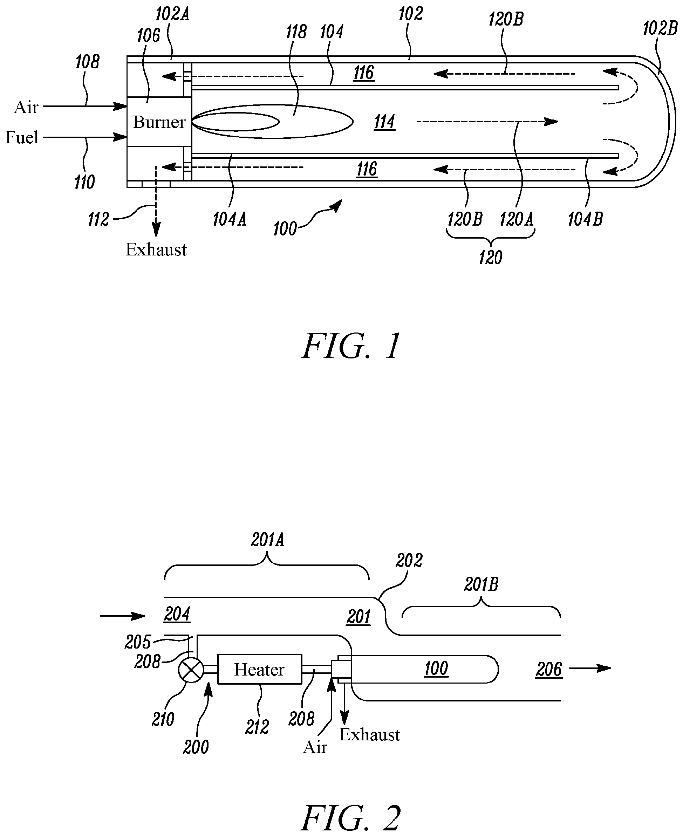

Figure 1 shows a first example heating device 100 which may be used to heat a flow of hydrogen by direct contact of the flow with the exterior of the heating device 100. The flow of hydrogen may be provided to the heating device in liquid, supercritical or gaseous form. If the flow of hydrogen is provided to the device in liquid or supercritical form then heating involves a change in state, or completion of change of state, and may optionally also involve a rise in temperature, depending on the flow rate of hydrogen and the rate of heat output from the heating device 100. If the flow of hydrogen provided to the heating device 100 is in gaseous form then the heating device 100 provides a rise in temperature of the flow of gaseous hydrogen.

The heating device 100 comprises an outer metallic tube 102 and an inner ceramic tube 104. A burner or combustor 106 is located at a first end 102A of the outer tube 102. A second end 102B of the outer tube 102, remote from the first end 102A, is closed. The combustor 106 is arranged to receive air and fuel supplies via inputs 108, 110. The fuel may be a small portion of a flow of hydrogen which is to be heated by the heating device 100. In operation of the heating device 100, the combustor 106 combusts fuel provided at input 108 (flame 118) and combustion products are introduced into a first end 104A of the inner, ceramic tube 104, the inner tube 104 being open at a second end 104B thereof remote from the first end 104A. As indicated by the dotted arrows in Figure 1, combustion products produced by the combustor 106 move along a flow path 120 from the combustor 106 to an output 112 of the heating device 100, the flow path 120 having a first portion 120A which includes the interior 114 of the inner ceramic tube 104 and a subsequent second portion 120B which includes space 116 between the outer and inner tubes 102, 104. Combustion products move along the second portion 120B of the flow path 120 such that they are in contact with the internal surface of the outer tube 102, thus transferring heat through the outer tube 102 to a flow of hydrogen in contact with the exterior of the outer tube 102.

The heating device 100 further includes an igniter (not shown) mounted alongside the burner 106 either parallel or at a slight angle to the longitudinal axis of the device 100 and arranged to produce a spark which propagates towards the centre of the interior 114 of the ceramic tube 104 in order to ignite the air and fuel introduced at inputs 108, 110.

Figure 2 shows heating apparatus 200 comprising the heating device 100 of Figure 1. The heating apparatus 200 comprises a conduit 201 for conducting a flow of hydrogen to be heated by the heating apparatus 200 from a principal input port 204 to a principal output port 206 of the conduit 201. The conduit 201 has a conduit wall 202 and comprises first 201A and second 201B portions. The heating device 100 extends through the conduit wall 202 such that the heating device 100 is located within the second portion 201B of the conduit 201, between the principal input port 204 and the principal output port 206. The heating device 100 extends parallel to the conduit wall 202 of the second portion 201B of the conduit 201.

The conduit 201 has a subsidiary output port 205, immediately upstream of the principal input port 204, between the principal input port 204 and the position at which the heating device 100 extends through the conduit wall 202. A subsidiary conduit 208, which includes a flow-control valve 208 and optionally a heater 212, connects the subsidiary output port 205 to the fuel input 108 of the heating device 100, in order to provide the combustor 106 with hydrogen fuel. If the flow of hydrogen to be heated by the heating apparatus 200 is liquid or supercritical hydrogen, the heater 212 may be required; if the flow of hydrogen to be heated is gaseous, the heater 212 might be dispensed with.

In a variant of the heating device 100 of Figure 1, the igniter is mounted radially with respect to the longitudinal axis of the device, the longitudinal axis being roughly coincident with arrow 120A in Figure 1. The variant heating device may be comprised in a heating apparatus similar to the apparatus 200 of Figure 2. In this case, the igniter is mounted to the conduit wall 202 through a tube arrangement which passes through the conduit wall 202 and the outer and inner tubes 102, 104 and into the interior 114 of the inner tube 104.

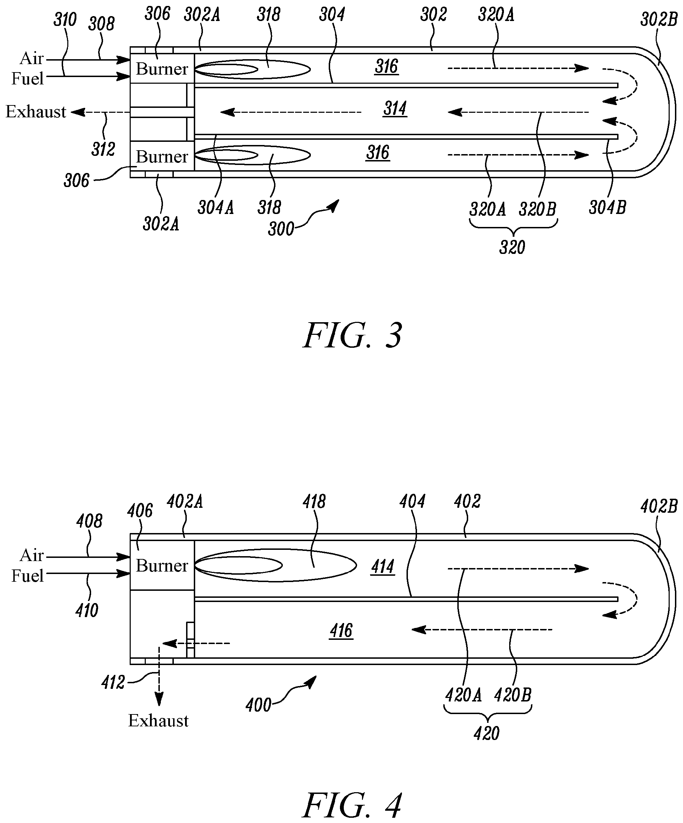

Figure 3, in which parts are labelled using reference numerals differing by 200 from those labelling corresponding parts in Figure 1, shows a second example heating device 300 which comprises a metallic outer tube 302 and a ceramic inner tube 304. An annular combustor 306 is disposed at a first end 302A of the outer tube 302 and arranged, in use of the heating device 300, to introduce combustion products into space 314 between the outer and inner tubes 302, 304 at their first ends 302A, 304A. The outer tube 302 is closed at its second end 302B. First and second ends 304A, 304B of the inner tube 304 are open. Combustion products produced by the annular combustor 306 flow to output 312 of the heating device 300 along a flow path 320 having a first flow path portion 320A which includes space 316 between the outer and inner tubes 302, 304, and a subsequent second flow path portion 314 which includes the interior 314 of the inner tube 304. The combustion products are in contact with the internal surface of the outer tube 302 as they traverse the first flow path portion 320A.

Figure 4, in which parts are labelled with reference numerals differing by 300 from those labelling corresponding parts in Figure 1, shows a third example heating device 400 comprising a metallic outer tube 402 and a combustor 406 disposed at a first end 402A of the outer tube 402, the outer tube being closed at a second end 402B remote from the combustor 406. The heating device 400 further comprises a planar ceramic divider 404 which longitudinally divides the interior of the outer tube 402 into first and second spaces 414, 416 over most of the length of the outer tube 402. In a plane normal to the plane of Figure 4, the divider 404 contacts the internal surface of the outer tube 402. The combustor 406 is arranged to introduce combustion products into the first space 414. In use of the heating device 400, combustion products pass from the combustor 406 to output 412 on a flow path 420 having a first flow path portion 420A which includes space 414 and a subsequent second flow path portion 420B which includes space 416. The combustion products are in contact with the internal surface of the outer tube 402 as they traverse both first and second flow path portions 420A, 420B.

The heating devices 300, 400 of Figures 3 and 4 each have an igniter as described above in relation to the heating device 100 of Figure 1.

Either of the heating devices 300, 400 of Figures 3 and 4 may substitute the heating device 100 within the heating apparatus 200 of Figure 2 to provide further example heating apparatus of the invention.

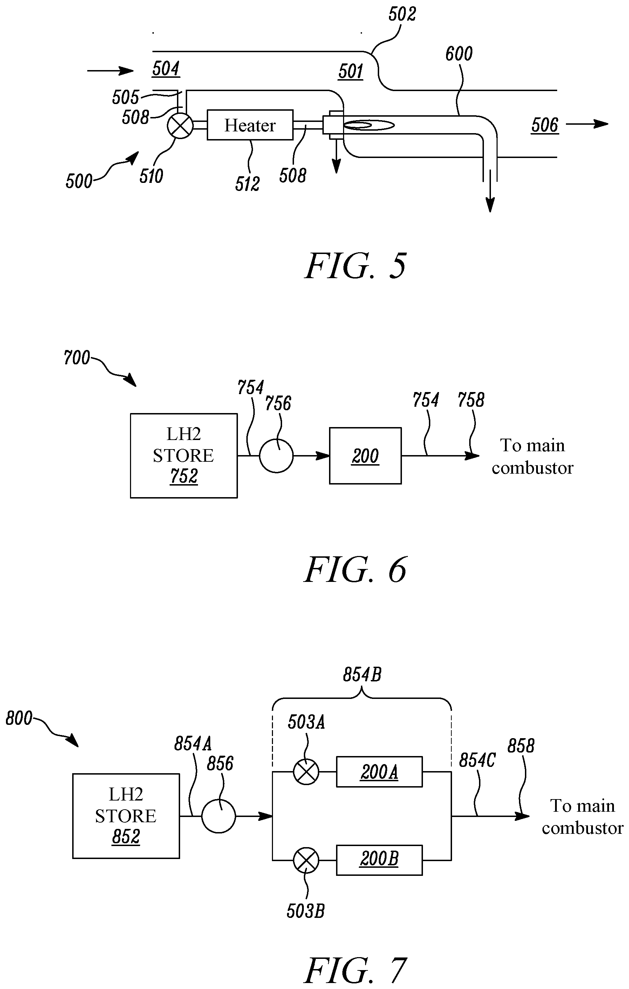

Figure 5 shows a second example heating apparatus 500 comprising a heating device 600. Parts of the apparatus 500 of Figure 5 are labelled using reference numerals differing by 300 from those labelling corresponding parts in Figure 2. The heating device 600 comprises an outer metallic tube and a combustor. The combustor is located at a first end of the outer tube. The outer tube is open at the second end thereof remote from the combustor, forming an output of the heating device 600 which extends through conduit wall 502 of conduit 501. The heating device 600 has an igniter as described above in relation to the heating device 100 of Figure 1.

Figure 6 shows a first example fuel system 700 which comprises a store 752 of liquid hydrogen and a fuel line 754 including a fuel pump 756 and the heating apparatus 200 of Figure 2. The fuel system 700 provides a flow of gaseous hydrogen at an output 758 of the fuel line 754. In one example application, the fuel system 700 may be comprised in an aircraft and arranged to provide a flow of gaseous hydrogen to the combustor of a propulsive hydrogen-burning gas turbine engine of the aircraft.

Figure 7 shows a second example fuel system 800 comprising a store 852 of liquid hydrogen and a fuel line having first, second and third portions 854A, 854B, 854C respectively. In operation of the fuel system 800, a flow of gaseous hydrogen is provided at an output 858 of the fuel line. In one example application, the flow of gaseous hydrogen may be provided to the combustor of a hydrogen-burning gas turbine engine. The first portion 854A of the fuel line includes a liquid hydrogen pump 856. The second portion 854B of the fuel line comprises two sub-portions arranged in parallel, each sub-portion including a respective flow-control valve 503A, 503B and a respective heating apparatus 200A, 200B as described above with reference to Figure 2. The two sets of heating apparatus 200A, 200B provide the fuel system 800 with redundancy (improving reliability), increased control of the overall heating provided by the fuel system 800 and potentially a reduced load on each apparatus 200A, 200B.

## Claims

1. A heating device (100; 300; 400; 600) for heating a flow of hydrogen, the heating device comprising
(i) an elongate, thermally-conductive outer tube (102; 302; 402);
(ii) a combustor (106; 306; 406) arranged to combust air and gaseous hydrogen input to the heating device and to introduce resulting combustion products into a first end of the outer tube; and
(iii) an igniter arranged to ignite the air and gaseous hydrogen,
wherein the heating device is arranged such that combustion products produced by the combustor flow from the combustor to an output (112; 312; 412) of the heating device along a flow path (120; 320; 420) such that they are in contact with at least a portion of the internal surface of the outer tube over at least a portion (120B; 320A; 420A, 420B) of the flow path.

2. A heating device (100) according to claim 1 wherein
(i) the second end (102B) of the outer tube is closed;
(ii) the heating device comprises an inner tube (104) within the outer tube; and
(iii) the combustor (106) is arranged to introduce combustion products into a first end (104A) of the inner tube, the second end (104B) of the inner tube being open;
wherein the heating device is arranged such that combustion products produced by the combustor flow from the combustor to the output (112) of the heating device along a flow path (120) having a first flow path portion (120A) including the interior (114) of the inner tube and a subsequent second flow path portion (120B) which includes space (116) between the inner and outer tubes.

3. A heating device (300) according to claim 1 wherein:
(i) the second end (302B)of the outer tube (302) is closed;
(ii) the heating device comprises an inner tube (304) within the outer tube, the inner tube being open at both ends (304A, 304B); and
(iii) the combustor (306) is arranged to introduce combustion products into the space (316) between the inner and the outer tube,
wherein the heating device is arranged such that combustion products produced by the combustor flow from the combustor to the output (312) of the heating device along a flow path (320) having a first flow path portion(320A) including space (316) between the inner and outer tubes and a subsequent second flow path portion (320B) including the interior(314) of the inner tube.

4. A heating device (400) according to claim 1 wherein:
(i) the second end (402B) of the outer tube (402) is closed;
(ii) the outer tube contains a partition (404) which longitudinally divides the interior of the outer tube into first (414) and second (416) spaces over a length portion thereof; and
(iii) the combustor (406) is arranged to introduce combustion products into the first space (414),
and wherein the heating device is arranged such that combustion products produced by the combustor flow from the combustor to the output (412) of the heating device along a flow path (420) having a first flow path portion (420A) and a subsequent second (420B) flow path portion, the first flow path portion including the first space and the second flow path portion including the second space.

5. Apparatus (200; 500) for heating a flow of hydrogen, the apparatus comprising a conduit (201; 501) for conducting the flow of hydrogen from a principal input port (204; 504) to a principal output port (206; 506) thereof, the apparatus further comprising a heating device (100; 600) according to any preceding claim and located at least partially within the conduit between the principal input port and the principal output such that a portion of the internal surface of the outer tube with which combustion products are in contact in use of the apparatus is inside the conduit.

6. Apparatus (500) according to claim 5 wherein the conduit (500) has a conduit wall (501) and the second end of the outer tube of the heating device (600) is open and extends through a conduit wall (501), forming an output for combustion products.

7. Apparatus (200; 500) according to claim 5 or claim 6 wherein the conduit wall has a subsidiary output port (205; 505) between the principal input port and the principal output port, the heating apparatus further comprising a subsidiary conduit (208; 508) arranged to transport a portion of a flow of hydrogen input at the principal input port from the subsidiary output port to the combustor of the heating device.

8. Apparatus according to claim 7 wherein the subsidiary conduit includes a heater (212; 512) arranged to heat hydrogen within the subsidiary conduit.

9. Apparatus (200; 500) according to any of claims 5 to 8 wherein the heating device (100; 600) extends parallel to a portion of the conduit which includes the heating device.

10. A fuel system (700; 800) comprising a store of hydrogen and a fuel line (754; 854A, 854B, 854C) coupling the store of hydrogen to an output (758; 858) of the fuel system, wherein the fuel line includes apparatus (200; 200A, 200B) according to any of claims 5 to 9.

11. A fuel system (800) according to claim 10 wherein a central length portion (854B) of the fuel line comprises two sub-portions arranged in parallel, each sub-portion including a respective apparatus (200A, 200B) according to any of claims 5 to 9.

12. An aircraft comprising a fuel system according to claim 10 or claim 11.
